# EUROPÄISCHE PATENTSCHRIFT

(11) **EP 0 854 101 B1**
(45) Veröffentlichungstag und Bekanntmachung des Hinweises auf die Patenterteilung: **12.09.2001**
(21) Anmeldenummer: 98100604.2
(22) Anmeldetag: 15.01.1998
(51) Int. Cl.: B65G 27/04

(54) **Vorrichtung zum Ausrichten von Steinen**
Device for aligning stones
Dispositif pour orienter des pierres

(30) Priorität: 16.01.1997 DE 29700711 U
(43) Veröffentlichungstag der Anmeldung: 22.07.1998
(73) Patentinhaber: Kies- und Betonwerk Hetzlinshofen GmbH & Co. KG, 87760 Lachen (DE)
(72) Erfinder: Gebhart, Hans, 87700 Memmingen (DE)
(74) Vertreter: Lorenz, Werner, Dipl.-Ing.

(56) Entgegenhaltungen:
- DE-A- 3 526 782
- US-A- 2 324 246
- US-A- 5 123 516
- PATENT ABSTRACTS OF JAPAN vol. 010, no. 083 (M-466), 2.April 1986 & JP 60 223753 A (MIYUUCHIYUARU:KK), 8.November 1985,

## Beschreibung

Die Erfindung betrifft eine Vorrichtung zum Ausrichten von Steinen aus Beton oder betonähnlichem Material, insbesondere Pflastersteinen, mit einer Vibrationseinrichtung und einer gegen die Horizontale schräg gestellten Ausrichteinrichtung.

Aus der US 5 123 516 ist eine Vorrichtung zum Ausrichten bestimmter Gegenstände bekannt, die mehrere, jeweils durch in vertikaler Richtung verlaufende Wände abgetrennte Rinnen aufweist. An den vertikalen Wänden sind voneinander beabstandete Anschlagglieder angebracht.

Ein Sortieren von Steinen ist mit dieser Vorrichtung jedoch nicht möglich, da sich diese aufgrund ihres hohen Reibwertes unweigerlich innerhalb der Rinnen verhaken würden.

Die US 2 324 246 beschreibt eine Vorrichtung zum Ausrichten von Dosen, bei der einem ebenen Mittelteil schräge Flächen zugeordnet sind. Die auszurichtenden Dosen rutschen auf den schrägen Flächen nach unten und werden durch Anschlagglieder gewendet, die sich an der Oberkante der schrägen Flächen befinden.

Jedoch ist auch diese Vorrichtung nicht für Steine verwendbar.

Aus der DE 35 26 782 A1 ist eine Vorrichtung zum künstlichen Altern von Pflastersteinen aus Beton oder betonähnlichem Material bekannt, an welche sich eine Ausrichteinrichtung anschließt, die mehrere nebeneinander liegende Sammelrinnen aufweist.

Nachteilig bei der dort beschriebenen Sammeleinrichtung ist jedoch, daß sich die Steine am Einlauf in die Sammelrinnen und auch in den Sammelrinnen selbst verklemmen können und somit immer wieder Förderunterbrechungen auftreten.

Die G 92 15 916 beschreibt ebenfalls eine Vorrichtung zum künstlichen Altern von Pflastersteinen aus Beton. Dabei ist in Förderrichtung nach der Ausrichteinrichtung eine schräg gegen die Horizontale geneigte Aufnahmeplattform vorgesehen.

Durch diese Maßnahme kann jedoch das Problem des Verklemmens der Steine in den Sammelrinnen auch nicht gelöst werden.

Es ist daher Aufgabe der Erfindung, eine Vorrichtung zum Ausrichten von Steinen zu schaffen, mit welcher in einfacher und zuverlässiger Weise sichergestellt wird, daß alle auszurichtenden Steine sich nach dem Durchlaufen der Ausrichteinrichtung in derselben gewünschten Lage befinden und dadurch anschließend problemlos gebündelt, verpackt oder palettiert werden können.

Erfindungsgemäß wird diese Aufgabe durch die in Anspruch 1 genannten Merkmale gelöst.

Durch das erfindungsgemäße Mittelteil mit den daran angeordneten seitlichen Anlaufflächen, wird erreicht, daß die Steine in dem Mittelteil verbleiben und sich nach der Ausrichtung nicht mehr verdrehen können. Dies wird dadurch sichergestellt, daß die Breite des Mittelteils wenigstens annähernd einer der beiden kürzeren Kantenlängen der Steine entspricht. Somit ist eine an ihre spätere Verpackung angepaßte Ausrichtung der Steine in der Ausrichteinrichtung nach ihrer Breite oder ihrer Höhe möglich.

Die Drehung der Steine in der Weise, daß alle Steine gleich ausgerichtet sind, erfolgt durch die erfindungsgemäßen Anschlagglieder, um welche sich die Steine drehen und somit in das Mittelteil gelangen.

Durch das erfindungsgemäße Versetzen der Anschlagglieder in Längsrichtung können sich die Steine nicht an den Anschlaggliedern selbst verklemmen. Vielmehr ist dadurch vorteilhafterweise ein sicheres Verdrehen der Steine in der gewünschten Art und Weise gegeben.

Dadurch, daß die Anlaufflächen schräge Anlaufflächen sind, ist ein sicheres Nach-Unten-Rutschen der Steine von den schrägen Anlaufflächen in das Mittelteil gegeben.

Eine einfache und für die Funktion der Vorrichtung vorteilhafte Ausführungsform der Anschlagglieder kann dadurch erreicht werden, daß die Anschlagglieder aus den schrägen Anlaufflächen ragende Anschlagstifte sind.

Die Funktion der Anschlagstifte kann in einer Weiterbildung der Erfindung dadurch verbessert werden, daß sie im wesentlichen senkrecht zum Boden des Ausrichtteiles angeordnet sind.

Eine weitere vorteilhafte Ausführungsform der Erfindung kann darin bestehen, daß die Anschlagglieder als Anschlagkegel ausgebildet sind.

Dies ermöglicht ein sicheres Drehen der Steine bei gleichzeitiger einfacher Konstruktion und Montage der Anschlagglieder.

In einer Weiterbildung der Erfindung kann vorgesehen sein, daß mehrere Sammelrinnen parallel nebeneinander angeordnet sind, wobei die schrägen Anlaufflächen zwischen benachbart zueinander liegenden Sammelrinnen wenigstens annähernd in Dachform oder Trapezform ausgebildet sind.

Damit ergibt sich eine besonders platzsparende Ausrichteinrichtung mit einer hohen Aufnahmekapazität für auszurichtende Steine, bei der jedoch die Steine nicht von einer Sammelrinne in die andere gelangen können.

In einer vorteilhaften Ausgestaltung der Erfindung kann ferner vorgesehen sein, daß zwischen dem Eintragteil und dem Ausrichtteil eine Abstreifleiste derart angeordnet ist, daß zwischen dem Boden des Eintragteils ein Durchgang angeordnet ist, welcher wenigstens der Höhe der auszurichtenden Steine entspricht.

Dadurch wird verhindert, daß auszurichtende Steine hochkant in die Sammelrinnen gelangen können. Durch die Abstreifleiste werden nämlich die im Eintragteil ankommenden Steine umgeworfen, so daß sie auf ihrer größten Fläche zu liegen kommen. Dies wird durch die Schwingungen der Vibrationseinrichtung unterstützt.

Bei bestimmten Steinformen, insbesondere wenn keine großen Längenunterschiede zwischen Höhe, Breite und Länge der Steine besteht, kann es von Vorteil sein, wenn in Förderrichtung nach der Ausrichteinrichtung eine weitere Ausrichteinrichtung angeordnet ist.

Mit dieser zusätzlichen Ausrichteinrichtung können dann eventuell hochkant am Ende der Sammelrinne ankommende Steine nachträglich ausgerichtet werden.

In einer weiteren vorteilhaften Ausführungsform der Erfindung kann vorgesehen sein, daß die Vibrationseinrichtung einen Motor aufweist, der mit Unwuchtgliedern versehen ist, welche auf einer Welle angeordnet sind, die eine horizontale Achse aufweist.

Alternativ dazu kann erfindungsgemäß vorgesehen sein, daß die Vibrationseinrichtung zwei gegenläufige Motoren aufweist, die jeweils mit einem Unwuchtglied versehen sind, welche jeweils auf einer Welle angeordnet sind, die eine horizontale Achse aufweist, zur Erzeugung einer gerichteten Schwingung.

Dadurch entstehen auf dem Boden der Ausrichteinrichtung Vibrationen, die in vertikaler Richtung und in Längsrichtung der Sammelrinnen ausgerichtet sind. Insbesondere durch die Vibrationen in vertikaler Richtung werden die Steine immer wieder geringfügig vom Boden angehoben, wodurch ein Verklemmen der Steine noch effektiver verhindert wird. Durch die Vibrationen im Eintragteil werden die Steine umgeworfen, so daß sie bereits vor dem Eintritt in die Sammelrinnen nur auf ihrer größten Fläche zu liegen kommen können. Die bei zwei Motoren entstehende Schwingung ist dabei auf den Mittelpunkt der Ausrichteinrichtung gerichtet, wodurch die Steine besonders gut vom Boden gelöst werden.

Nachfolgend ist ein Ausführungsbeispiel der Erfindung anhand der Zeichnung prinzipmäßig beschrieben.

Es zeigt:
- Fig. 1: eine erfindungsgemäße Ausrichteinrichtung in der Seitenansicht;
- Fig. 2: die Ausrichteinrichtung in der Vorderansicht; und
- Fig. 3: die Ausrichteinrichtung in der Draufsicht.

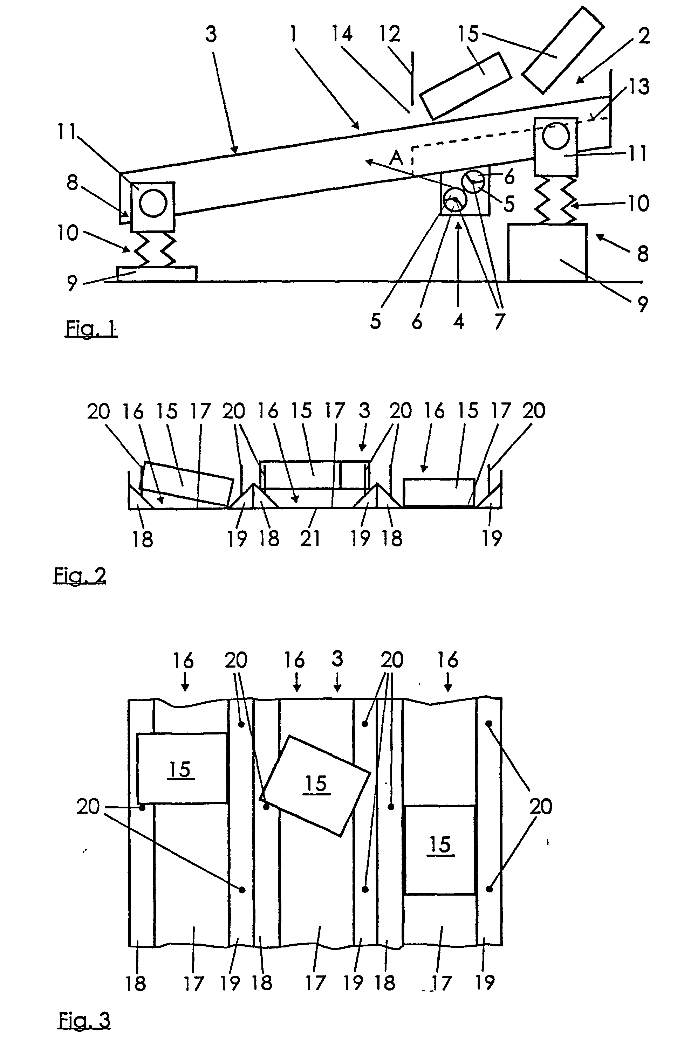

Gemäß Fig. 1 ist eine Ausrichteinrichtung 1 mit einem Eintragteil 2 und einem Ausrichtteil 3 dargestellt. An der Unterseite der Ausrichteinrichtung 1 befindet sich eine Vibrationseinrichtung 4, die in diesem Fall zwei Motoren 5 mit jeweils einem daran angeordneten Unwuchtglied 6 aufweist. Die Unwuchtglieder 6 befinden sich dabei jeweils auf einer Welle 7, welche eine horizontale Achse aufweist. Durch die Vibrationseinrichtung 4 können Vibrationen in vertikaler Richtung und in Längsrichtung der Ausrichteinrichtung 1 erzeugt werden. Die beiden Motoren 5 sind hierbei gegenläufig, wodurch eine gerichtete Schwingung je nach Plazierung der Motoren 5 und der Anordnung der Unwuchtglieder 6 an den Motoren 5 entsteht. Wie durch den Pfeil A dargestellt ist die Schwingung in diesem Fall zur Mitte der Ausrichteinrichtung 1 gerichtet. Wenn der Pfeil A als Vektor angesehen wird, kann die gerichtete Schwingung auch als Vektorschwingung bezeichnet werden.

Die Ausrichteinrichtung 1 ist schräg gegen die Horizontale ausgerichtet, wobei unter dem Eintragteil 2 eine Dämpfungseinrichtung 8 angeordnet ist, die aus einem Bodenteil 9, einer Federeinrichtung 10 sowie einem Befestiungsteil 11 besteht, durch welches die Dämpfungseinrichtung 8 mit der Ausrichteinrichtung 1 verbunden ist. Eine solche Dämpfungseinrichtung 8 ist auch am Ausgang des Ausrichtteiles 3 angeordnet. Durch die Dämpfungseinrichtung 8 werden von der Vibrationseinrichtung 4 erzeugte Vibrationen auf die gesamte Ausrichteinrichtung 1 übertragen.

Zwischen dem Eintragteil 2 und dem Ausrichtteil 3 ist oberhalb eine Abstreifleiste 12 so angebracht, daß zwischen dem Boden 13 des Eintragteils 2 und der Abstreifleiste 12 ein Durchgang 14 verbleibt. Die Abstreifleiste 12 verhindert, daß auszurichtende Steine 15 hochkant von dem Eintragteil 2 durch den Durchgang 14 in das Ausrichtteil 3 gelangen können.

Fig. 2 zeigt eine Vorderansicht der Ausrichteinrichtung 1, wobei jedoch das Eintragteil 2 nicht dargestellt ist. Das Ausrichtteil 3 weist dabei mehrere Sammelrinnen 16 auf, die jeweils ein Mittelteil 17 und daran angeordnete seitliche Anlaufflächen 18, 19 aufweisen. Die Breite des Mittelteiles 17 entspricht wenigstens annähernd einer der beiden kürzeren Kantenlängen der Steine 15. In den meisten Fällen ist dies die Breite der Steine 15, wobei jedoch die Breite des Mittelteiles 17 auch der Höhe der Steine 15 entsprechen kann.

An den Anlaufflächen 18, 19 sind als Anschlagstifte 20 ausgebildete Anschlagglieder angebracht, die im wesentlichen senkrecht zum Boden 21 des Ausrichtteils 3 ausgerichtet sind. Es ist auch möglich, die Anschlagglieder als Anschlagkegel auszubilden, was jedoch nicht dargestellt ist.

Wenn, wie in Fig. 2 dargestellt, mehrere Sammelrinnen 16 nebeneinander angeordnet sind, bilden die aneinandergrenzenden Anlaufflächen 18, 19 eine Dachform. Dadurch ist es den Steinen 15 nicht möglich, von einer Sammelrinne 16 in eine benachbart dazu angeordnete Sammelrinne 16 zu gelangen. Es besteht selbstverständlich im Bedarfsfall auch die - nicht dargestellte - Möglichkeit, daß aneinander angrenzende Anlaufflächen eine Trapezform bilden. Es wäre dann auch möglich, die oben beschriebenen Anschlagkegel auf dem entstehenden Plateau der Trapezform anzuordnen.

Die in Fig. 3 dargestellte Draufsicht des Ausrichtteils 3 der Ausrichteinrichtung 1 zeigt drei Steine 15, die sich in jeweils einer Sammelrinne 16 befinden. Da die Steine 15 verschiedene Positionen innerhalb der Sammelrinne 16 erreicht haben, ist die Funktionsweise der Ausrichteinrichtung 1 bei der Ausrichtung von Steinen 15 zu erkennen.

Weiterhin sind in Fig. 3 die Abstände der Anschlagstifte 20 zueinander dargestellt. So weist ein auf der Anlauffläche 18 angeordneter Anschlagstift 20 von dem in Förderrichtung nächstliegenden auf der Anlauffläche 19 angeordneten Anschlagstift 20 einen Abstand auf, der wenigstens der Breite der auszurichtenden Steine 15 entspricht. Dies verhindert ein Verklemmen der Steine 15 in der Sammelrinne 16.

Der seitliche Rand des Mittelteils 17 weist von dem gegenüberliegenden Anschlagstift 20 einen Abstand auf, der geringer ist, bzw. höchstens so groß ist wie die Länge der Steine 15. Dadurch wird jeder Stein 15, der noch nicht in seiner Längsrichtung in der Sammelrinne 16 ausgerichtet ist und sich somit im Mittelteil 17 befindet, mit seiner längeren Kantenlänge bzw. Längsseite gegen einen der Anschlagstifte 20 gedrückt. Da die dem Anschlagstift 20 gegenüberliegende, kürzere Seite des Steines 15 am Rand des Mittelteils 17 anliegt, dreht sich der Stein 15 um den Anschlagstift 20, und rutscht dabei von den beiden Anlaufflächen 18, 19 nach unten. Diese Drehbewegung wird so lange fortgesetzt, bis der Stein 15 sich komplett im Mittelteil 17 befindet und somit in Längsrichtung ausgerichtet ist.

Nach Durchlaufen der Ausrichteinrichtung 1 können die Steine 15 in bekannter Weise durch nicht dargestellte Einrichtungen gebündelt, verpackt oder palettiert werden.

Selbstverständlich kann die Ausrichteinrichtung 1 an verschiedene Größen von Steinen 15 angepaßt werden und auch die Position der Anschlagstifte 20 auf den Anlaufflächen 18, 19 sowie die Anlaufflächen 18, 19 selbst können an die verschiedenen Größen von auszurichtenden Steinen 15 angepaßt werden. Dazu kann entweder die Ausrichteinrichtung 1 umgebaut werden oder es kann eine komplett neue Ausrichteinrichtung 1 erstellt werden.

Anstelle der Ausbildung der Anlaufflächen 18, 19 als schräge Anlaufflächen 18, 19 ist auch jede andere Form der Anlaufflächen 18, 19 denkbar, die die Steine 15 dazu veranlaßt, eine Drehbewegung auszuführen, um in der gewünschten Position ausgerichtet in das Mittelteil 17 zu gelangen.

Nach der Ausrichteinrichtung 1 kann eine weitere, nicht dargestellte Ausrichteinrichtung angeordnet sein. Dies kann vorteilhaft sein, wenn die Steine 15 keine großen Unterschiede bezüglich ihrer Längenausdehnung in Höhe, Breite und Länge aufweisen. Dann kann nämlich ein Ausrichten durch die Abstreifleiste 12 im Hinblick auf die Vermeidung des Eintretens von hochkant angeordneter Steine 15 in das Ausrichtteil 3 unter Umständen nicht möglich sein. Die am Ende des Ausrichtteils 3 ankommenden, hochkant ausgerichteten Steine 15 können dann mit dieser nicht dargestellten Ausrichteinrichtung nachträglich entsprechend ausgerichtet werden.

## Patentansprüche

1. Vorrichtung zum Ausrichten von Steinen aus Beton oder betonähnlichem Material, insbesondere Pflastersteine, mit einer Vibrationseinrichtung (4) und einer gegen die Horizontale schräg gestellten Ausrichteinrichtung (1), die ein Eintragteil (2) für die auszurichtenden Steine und ein Ausrichtteil (3) aufweist, das wenigstens eine in Förderrichtung verlaufende Sammelrinne (16) aufweist, wobei die Sammelrinne (16) ein Mittelteil (17) und zwei daran angeordnete seitliche Anlaufflächen (18,19) aufweist, wobei die Breite des Mittelteils (17) wenigstens annähernd einer der beiden kürzeren Kantenlängen der auszurichtenden Steine (15) entspricht, wobei die beiden Anlaufflächen (18,19) jeweils mit Anschlaggliedern (20) versehen sind, wobei die Anschlagglieder (20) auf der einen Anlauffläche (18) in Längsrichtung versetzt zu den Anschlaggliedern (20) auf der anderen Anlauffläche (19) angeordnet sind, und wobei die Anlaufflächen schräge Anlaufflächen (18,19) sind.

2. Vorrichtung zum Ausrichten von Steinen nach Anspruch 1,
wobei die Anschlagglieder (20) aus den schrägen Anlaufflächen (18,19) ragende Anschlagstifte (20) sind.

3. Vorrichtung zum Ausrichten von Steinen nach Anspruch 2,
wobei die Anschlagstifte (20) im wesentlichen senkrecht zum Boden (21) des Ausrichtteiles (3) angeordnet sind.

4. Vorrichtung zum Ausrichten von Steinen nach Anspruch 1,
wobei die Anschlagglieder (20) als Anschlagkegel ausgebildet sind.

5. Vorrichtung zum Ausrichten von Steinen nach einem nach einem der Ansprüche 1 bis 4,
wobei mehrere Sammelrinnen (16) parallel nebeneinander angeordnet sind, wobei die schrägen Anlaufflächen (18,19) zwischen benachbart zueinander liegenden Sammelrinnen (16) wenigstens annähernd in Dachform oder Trapezform ausgebildet sind.

6. Vorrichtung zum Ausrichten von Steinen nach einem der Ansprüche 1 bis 5,
wobei zwischen dem Eintragteil (2) und dem Ausrichtteil (3) eine Abstreifleiste (12) derart angeordnet ist, daß zwischen dem Boden (13) des Eintragteils (2) ein Durchgang (14) angeordnet ist, welcher wenigstens der Höhe der auszurichtenden Steine (15) entspricht.

7. Vorrichtung zum Ausrichten von Steinen nach einem der Ansprüche 1 bis 6,
wobei in Förderrichtung nach der Ausrichteinrichtung eine weitere Ausrichteinrichtung angeordnet ist.

8. Vorrichtung zum Ausrichten von Steinen nach ein der Ansprüche 1 bis 7,
wobei die Vibrationseinrichtung (4) einen Motor (5) aufweist, der mit Unwuchtgliedern (6) versehen ist, welche auf einer Welle (7) angeordnet sind, die eine horizontale Achse aufweist.

9. Vorrichtung zum Ausrichten von Steinen nach einem der Ansprüche 1 bis 7,
wobei die Vibrationseinrichtung (4) zwei gegenläufige Motoren (5) aufweist, die jeweils mit einem Unwuchtglied (6) versehen sind, welche jeweils auf einer Welle (7) angeordnet sind, die eine horizontale Achse aufweist, zur Erzeugung einer gerichteten Schwingung.

## Claims

1. Apparatus for aligning blocks of concrete or concrete-like material, in particular paving slabs, with a vibrating device (4) and an aligning device (1) which is mounted inclined to the horizontal and has an entry portion (2) for the blocks to be aligned and an aligning portion (3) which has at least one collecting channel (16) extending in the direction of feed, the collecting channel (16) having a middle portion (17) and two run-in surfaces (18, 19) mounted laterally thereon, the width of the middle portion (17) corresponding at least approximately to one of the two shorter edge lengths of the blocks (15) to be aligned, and the two run-in surfaces (18, 19) each being provided with stop members (20), in which the stop members (20) on the one run-in surface (18) are offset in the longitudinal direction with respect to the stop members (20) on the other run-in surface (19), and the run-in surfaces (18, 19) are inclined.

2. Apparatus for aligning blocks according to Claim 1,
in which the stop members (20) are stop pins (20) projecting out of the inclined run-in surfaces (18, 19).

3. Apparatus for aligning blocks according to Claim 2,
in which the stop pins (20) are arranged substantially perpendicular to the floor (21) of the aligning portion (3).

4. Apparatus for aligning blocks according to Claim 1,
in which the stop members (20) are in the form of stop cones.

5. Apparatus for aligning blocks according to one of Claims 1 to 4, in which a number of collecting channels (16) are arranged parallel and side by side, the inclined run-in surfaces (18, 19) between mutually adjacent collecting channels (16) at least approximately forming a roof shape or trapezium shape.

6. Apparatus for aligning blocks according to one of Claims 1 to 5, in which there is arranged between the entry portion (2) and the aligning portion (3) a stripper bar (12) in such a way that a window (14) is formed between the floor (13) of the entry portion (2), corresponding at least to the height of the blocks (15) to be aligned.

7. Apparatus for aligning blocks according to one of Claims 1 to 6, in which a further aligning device is mounted following the aligning device (1) in the direction of feed.

8. Apparatus for aligning blocks according to one of Claims 1 to 7, in which the vibrating device (4) has a motor (5 ) which is provided with out-of-balance members (6) which are mounted on a shaft (7) having a horizontal axis.

9. Apparatus for aligning blocks according to one of Claims 1 to 7, in which the vibrating device (4) has two oppositely rotating motors (5), each of which is provided with an out-of-balance member (6), mounted on a respective shaft (7) having a horizontal axis, for generating a vibration in a specific direction.

## Revendications

1. Dispositif pour aligner des pierres en béton ou en matériau analogue au béton, en particulier des pavés, comprenant un dispositif vibrateur (4) et un dispositif d'alignement (1) disposé en oblique par rapport à l'horizontale, qui comporte une partie de chargement (2) pour les pierres à aligner et une partie d'alignemert (3) qui comprend au moins une goulotte collectrice (16) s'étendant dans la direction du transport, dans lequel la goulotte collectrice (16) comporte une partie centrale (17) et deux rampes latérales (18, 19) disposées le long de cette partie, la largeur de la partie centrale (17) correspond au moins approximativement à un des deux côtés courts des pierres (15) à aligner, et les deux rampes (18, 19) sont pourvues chacune d'éléments de butée (20), les éléments de butée (20) situés sur l'une des rampes (18) étant décalés dans la direction longitudinale par rapport aux éléments de butée (20) situés sur l'autre rampe (19), les rampes étant des rampes obliques (18, 19).

2. Dispositif pour aligner des pierres selon la revendication 1,
dans lequel
les éléments de butée (20) sont des chevilles de butée (20) qui émergent des rampes obliques (18, 19).

3. Dispositif pour aligner des pierres selon la revendication 2,
dans lequel
les chevilles de butée (20) sont disposées sensiblement perpendiculairement au fond (21) de la partie d'alignement (3).

4. Dispositif pour aligner des pierres selon la revendication 1,
dans lequel
les éléments de butée (20) sont constitués par des cônes de butée.

5. Dispositif pour aligner des pierres selon l'une des revendications 1 à 4,
dans lequel
plusieurs goulottes collectrices (16) sont disposées parallèlement l'une à côté de l'autre, les rampes obliques (18, 19), prévues entre les goulottes collectrices (16) adjacentes entre elles, étant réalisées au moins approximativement en forme de toit ou en forme de trapèze.

6. Dispositif pour aligner des pierres selon l'une des revendications 1 à 5,
dans lequel
une barre de retenue (12) est disposée entre la partie de chargement (2) et la partie d'alignement (3) de telle manière qu'il existe entre le fond (13) de la partie de chargement (2) un passage (14) qui correspond au moins à la hauteur des pierres à aligner (15).

7. Dispositif pour aligner des pierres selon l'une des revendications 1 à 6,
dans lequel
un dispositif d'alignement additionnel est disposé en aval du dispositif d'alignement (1) dans le sens du transport.

8. Dispositif pour aligner des pierres selon l'une des revendications 1 à 7,
dans lequel
le dispositif vibrateur (4) comprend un moteur (5) qui est pourvu d'éléments de balourd (6), lesquels sont disposés sur un arbre (7) qui comporte un axe horizontal.

9. Dispositif pour aligner des pierres selon l'une des revendications 1 à 7,
dans lequel
le dispositif vibrateur (4) comprend deux moteurs (5) tournant l'un en sens inverse de l'autre qui sont pourvus chacun d'un élément de balourd (6), ces éléments étant disposés chacun sur un arbre (7) qui comporte un axe horizontal, pour la production d'une vibration orientée.
